(19) Europäisches Patentamt / European Patent Office / Office européen des brevets

(11) **EP 4 456 671 A1**

(12) **EUROPEAN PATENT APPLICATION**

(43) Date of publication:
**30.10.2024 Bulletin 2024/44**

(21) Application number: **23170234.1**

(22) Date of filing: **27.04.2023**

(51) International Patent Classification (IPC):
**H05B 45/355** (2020.01)    **H05B 45/325** (2020.01)
**H02M 1/42** (2007.01)    **H05B 45/38** (2020.01)
**H05B 45/385** (2020.01)

(52) Cooperative Patent Classification (CPC):
**H05B 45/355; H02M 1/342; H02M 1/38;
H02M 1/4258; H05B 45/325; H05B 45/38;
H05B 45/385**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tridonic GmbH & Co. KG
6851 Dornbirn (AT)**

(72) Inventor: **Klien, Dietmar
6850 Dornbirn (AT)**

(74) Representative: **Rupp, Christian et al
Mitscherlich PartmbB
Patent- und Rechtsanwälte
Karlstraße 7
80333 München (DE)**

(54) **CONVERTER FOR A LIGHT-EMITTING DIODE LOAD**

(57)    Disclosed is a converter (1) for an LED load (2). The converter (1) comprises a power factor correction, PFC, circuit (11). The PFC circuit (11) comprises a series connection (111, 112) of an inductance (111) and a power switch (112); and a control circuit (113). The control circuit (113) is configured to regulate an output voltage (114, $V_{out}$) of the PFC circuit (11) in accordance with a current (115, $I$) through the series connection (111, 112) and a peak current envelope (116, $\hat{I}$) for the same; and to offset the peak current envelope (116, $\hat{I}$) by a direct current, DC, component (117, $\hat{I}_{DC}$) that depends on an output power of the PFC circuit (11). This results in a low-THD peak-current control for the whole output power range of the converter (1).

FIG. 3

## Description

## Technical Field

The present disclosure relates to lighting technology, and in particular, to a converter for a light-emitting diode (LED) load, and a luminaire based thereon.

## Background Art

Power factor correction (PFC) circuits attempt to maximize a power factor of a connected load by drawing from an alternating current (AC) power supply an AC current that corresponds in amplitude curve and phase to the supplied AC voltage, thereby minimizing a Total Harmonic Distortion (THD).

Such PFC circuits typically make use of peak-current control, since an average-current control needs a more complicate current sensing.

Due to parasitic effects in the components of a PFC circuit, it turns out that a peak-current control results in a non-zero voltage plateau across the EMI capacitor around the zero-crossings of the supplied AC voltage, which ultimately results in a higher THD.

Integrated circuits (ICs) for analog peak-current control do not avoid or reduce said plateau, whereas ICs for digital peak-current control typically increase an on-time of a power switch of the PFC circuit close to the zero-crossings via calculations or table-based loop-up. A parameterization of such solutions is difficult because of their relatively complicated design, and for higher switching frequencies multiple look-up tables may be needed.

## Summary

It is an object to overcome the above-mentioned and other drawbacks. The objective is achieved by the embodiments as defined by the appended independent claims. Preferred embodiments are set forth in the dependent claims and in the following description and drawings.

A first aspect of the present disclosure relates to a converter for an LED load. The converter comprises a power factor correction, PFC, circuit. The PFC circuit comprises a series connection of an inductance and a power switch; and a control circuit. The control circuit is configured to regulate an output voltage of the PFC circuit in accordance with a current through the series connection and a peak current envelope for the same; and to offset the peak current envelope by a direct current, DC, component that depends on an output power of the PFC circuit.

The peak current envelope may depend on a control variable of the control circuit. The control variable may depend on a differential of the output voltage and its reference variable, and on a multiplicative fraction of a rectified input voltage of the PFC circuit.

The DC component may depend on the control variable of the control circuit, a constant coefficient of the control variable, and a constant offset of the DC component.

The constant coefficient and the constant offset may be derived from simulations or measurements at a minimum value and a maximum value of the output power of the PFC circuit.

The control circuit may comprise a proportional integral, PI, controller, being configured to provide the control variable of the control circuit in dependence of the differential of the output voltage and its reference variable.

The control circuit may comprise a pulse width modulation, PWM, signal generator, being configured to provide a first PWM control signal for the power switch in accordance with the control variable, the current through the series connection and the peak current envelope for the same.

An on-time of the first PWM control signal may depend on a given minimum on-time, on a given maximum on-time, and on an instant of on-time expiration when the current through the series connection exceeds the peak current envelope for the same.

The PFC circuit may comprise a Boost converter; and the first PWM control signal may be in accordance with one of: a discontinuous conduction mode, DCM, and a borderline conduction mode, BCM.

The PFC circuit may comprise a Flyback converter.

The Flyback converter may comprise a further series connection of a clamp switch and a clamp capacitance in parallel with the inductance.

The PWM signal generator may further be configured to provide a second PWM control signal for the clamp switch.

An on-time of the second PWM control signal may depend on a given on-time.

The on-times of the first and second PWM control signals may be mutually exclusive in accordance with a dead-time depending on a given minimum dead-time, and on an instant of dead-time expiration when a time derivative of a drain-source voltage of a last active switch of the power switch and the clamp switch becomes zero.

A second aspect of the present disclosure relates to a luminaire, comprising an LED load and a converter of the first aspect.

## Advantageous Effects

If a simple peak-current control is used, adding a DC component to the sinusoidal peak-current envelope improves an AC current waveform close to zero-crossing, but if the DC component is constant, the THD at low output power is adverse.

A DC component that depends on the output power of the PFC circuit provides a simple control scheme for good THD over a wide output power range.

The DC component proposed herein comprises a constant coefficient and a constant offset wherein both constants are derived from simulations or measurements at a minimum value and a maximum value of the output power of the PFC circuit. Notably, the constants themselves are independent of the output voltage of the PFC stage but do capture the dependency of the DC component of the output voltage by a simple parameterization.

The parameterized DC component avoids or at least reduces the non-zero voltage plateau across the EMI capacitor around the zero-crossings of the supplied AC voltage for the whole output power range, ultimately resulting in a low THD.

In contrast to digital approaches which typically increase the on-time of the power switch of the PFC circuit close to the zero-crossings
to correct the discharge of the EMI capacitor, adding a DC component / offset that depends on the output power but involves constant values that are independent of the output power is very simple and robust and independent of a switching frequency of the PFC circuit.

In turn, the switching frequency may be increased and a size of passive components may be reduced.

The technical effects and advantages described above equally apply to the converter and to the luminaire comprising the same.

## Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1    illustrates a luminaire in accordance with the present disclosure;

FIG. 2    illustrates a converter in accordance with the present disclosure;

FIG. 3    illustrates a PFC circuit in accordance with the present disclosure;

FIG. 4    illustrates a drive circuit for the clamp switch 120;

FIG. 5    illustrates a state diagram of the PFC circuit in accordance with the present disclosure; and

FIG. 6    illustrates a various electrical quantities of the PFC circuit in accordance with the present disclosure.

## Detailed Descriptions of Drawings

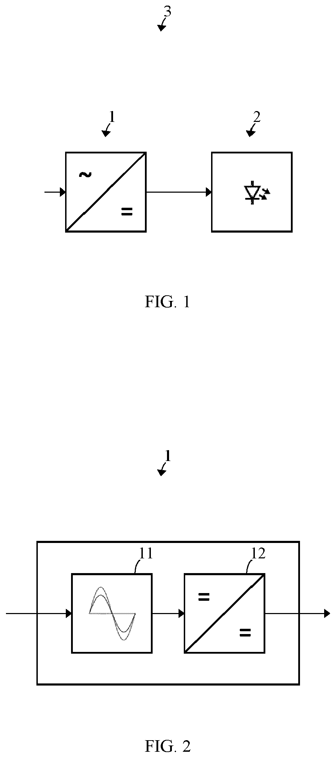

FIG. 1 illustrates a luminaire 3 in accordance with the present disclosure.

The luminaire 3 comprises an LED load 2, $R_{11}$ and a converter 1 for the LED load 2, $R_{11}$.

The LED load 2, $R_{11}$ may comprise one or more LEDs in series and/or in parallel, depending on the lighting scenario.

FIG. 2 illustrates a converter 1 in accordance with the present disclosure.

The converter 1 comprises a PFC circuit/stage 11 and may further comprise a DC-DC converter/stage 12.

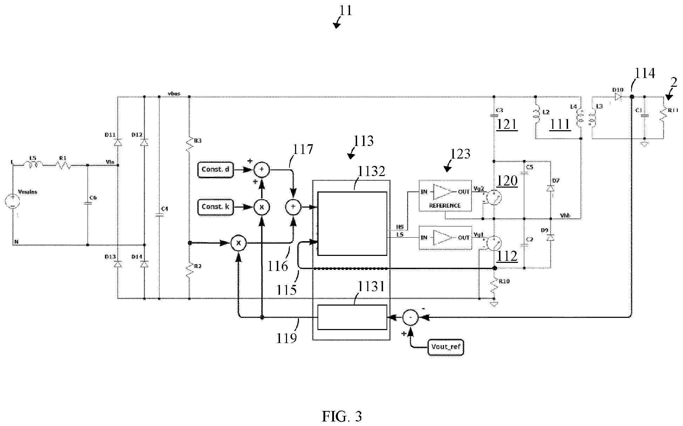

FIG. 3 illustrates a PFC circuit 11 in accordance with the present disclosure.

PFC may refer to a maximization of a power factor of a connected load by drawing from an AC power supply an AC current that corresponds in amplitude curve and phase to the supplied AC voltage, thereby minimizing a THD.

A power factor of an AC circuit may refer to a ratio of a real power absorbed by a connected load to an apparent power flowing in the circuit.

A THD may refer to a ratio of a sum of powers of all harmonic frequency components to a power of the fundamental frequency.

In accordance with FIG. 3, the PFC circuit 11 comprises a Flyback converter. Alternatively, a Boost converter (not shown) being operated in accordance with modes of operation such as a discontinuous conduction mode (DCM) or a borderline conduction mode (BCM) may be deployed as well.

The PFC circuit 11 comprises a series connection 111, 112 of an inductance 111 and a power switch 112.

In accordance with FIG. 3, the inductance 111 may be modelled as a parallel circuit of a magnetizing inductance $L_2$ and a primary inductance $L_4$ of an ideal transformer, for example.

The power switch 112 may in particular comprise a power semiconductor switch, such as a power metal-oxide-semiconductor field-effect transistor (MOSFET).

The PFC circuit 11 further comprises a control circuit 113.

The control circuit 113 is configured to regulate an output voltage 114, $V_{out}$ of the PFC circuit 11 in accordance with a current 115, $I$ through the series connection 111, 112 and a peak current envelope 116, $\hat{I}$ for the same.

In accordance with FIG. 3, the output voltage 114, $V_{out}$ may be tapped off at the LED load 2, $R_{11}$ being connected to an output port of the PFC circuit 11, the current 115, I through the series connection 111, 112 may be captured by means of a ground-referenced current sensing resistor $R_{10}$ in series to the power switch 112, and the peak current envelope 116, $\hat{I}$ for the current 115, $I$ may be provided by a ground-referenced resistive voltage divider $R_2$, $R_3$ in parallel to an EMI capacitor $C_4$.

The control circuit 113 may comprise a proportional integral (PI) controller 1131 and a PWM signal generator 1132.

PWM may refer to a continual on-off modulation of an electrical quantity, such as a voltage, by a switch, in accordance with a particular mode of operation of the superordinate circuit. For example, a PFC circuit may involve a PWM in accordance with modes of operation such as the DCM, the BCM or a continuous conduction mode (CCM).

The PWM signal generator 1132 may be configured to provide a first PWM control signal for the power switch 112 in accordance with a control variable 119, $R$ of the control circuit 113, the current 115, $I$ through the series connection 111, 112 and the peak current envelope 116, $\hat{I}$ for the same.

The PI controller 1131 may be configured to provide the control variable 119, $R$ of the control circuit 113 in dependence of a differential $V_{out}$ - $V_{out\_ref}$ of the output voltage 114, $V_{out}$ and its reference variable $V_{out\_ref}$.

The peak current envelope 116, $\hat{I} = C \cdot |V_{bus}| \cdot R(V_{out} - V_{out\_ref})$ may depend on the control variable 119, $R$ of the control circuit 113 and on a multiplicative fraction C of a rectified input voltage $C \cdot |V_{bus}|$ of the PFC circuit 11.

In accordance with FIG. 3, the multiplicative fraction C may correspond to a given ratio $\dfrac{R_2}{R_2 + R_3}$ defined by the above-mentioned resistive voltage divider $R_2$, $R_3$.

The control circuit 113 is further configured to offset the peak current envelope 116, $\hat{I}$ by a DC component 117, $\hat{I}_{DC}$ that depends on an output power of the PFC circuit 11.

The DC component 117, $\hat{I}_{DC} = k \cdot R(V_{out} - V_{out\_ref}) + d$ may depend on the control variable 119, $R$ of the control circuit 113, a constant coefficient k of the control variable 119, $R$, and a constant offset d of the DC component 117, $\hat{I}_{DC}$.

The constant coefficient k and the constant offset d may be derived from simulations or measurements at a minimum value and a maximum value of the output power of the PFC circuit 11, thereby capturing the dependency of the DC component 117, $\hat{I}_{DC}$ on the output power of the PFC circuit 11 over the whole output power range.

The Flyback converter may comprise a further series connection 120, 121 of a clamp switch 120 and a clamp capacitance 121 in parallel with the inductance 111, thereby ending up with an active clamp Flyback (ACF) converter.

The PWM signal generator 1132 may further be configured to provide a second PWM control signal for the clamp switch 120.

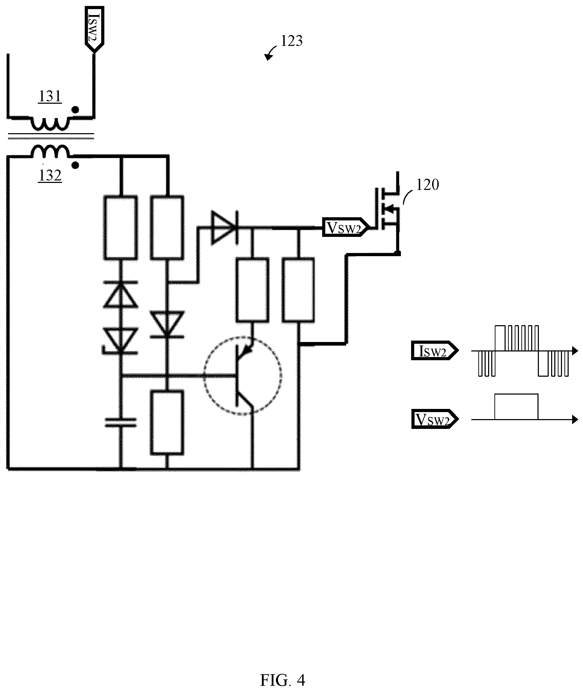

The floating electric reference potential of the clamp switch 120 may require a so-called high-side drive circuit, such as the one illustrated in FIG. 4 being operable in a transforming manner.

More specifically, FIG. 4 illustrates an exemplary implementation of a drive circuit 123 for the clamp switch 120 including an ancillary transformer 131, 132, which may be connected to the PWM signal generator 1132 (see FIG. 3) and configured to transform a drive current $I_{SW2}$ in terms of its electric potential.

As indicated in FIG. 4, the (transformed) drive current $I_{SW2}$ includes alternating trains of positive current pulses and negative current pulses.

The clamp switch 120 is operable in accordance with the transformed drive current $I_{SW2}$. To this end, the drive circuit 123 may further comprise a circuitry for conditioning of the transformed drive current $I_{SW2}$ into a control signal $V_{SW2}$ of the clamp switch 120.

The conditioning circuitry is configured to convert each train of positive current pulses into a positive voltage pulse of the control signal $V_{SW2}$, wherein a time duration of the positive voltage pulse corresponds to a time duration of the underlying train of positive current pulses.

The conditioning circuitry is further configured to convert each train of negative current pulses into a zero line voltage of the control signal $V_{SW2}$, wherein a time duration of the zero line voltage corresponds to a time duration of the underlying train of negative current pulses.

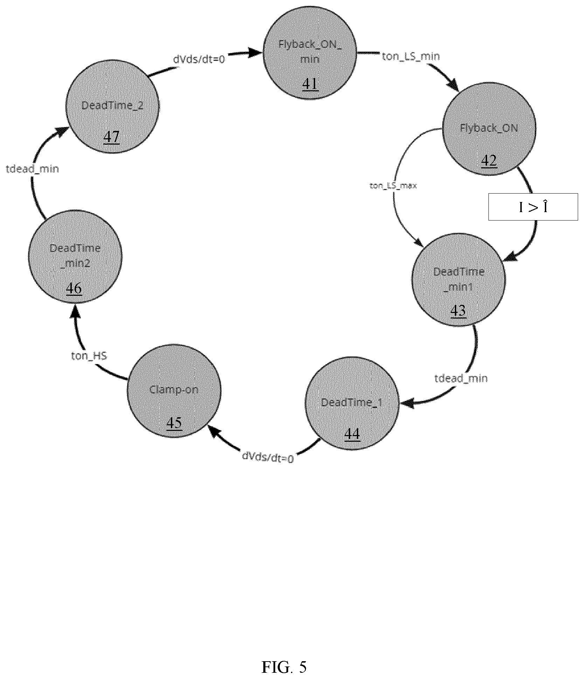

FIG. 5 illustrates a state diagram of the PFC circuit 11 in accordance with the present disclosure.

As previously explained, if the PFC circuit 1 comprises an ACF converter, the PWM signal generator 1132 may be configured to provide a first PWM control signal for the power switch 112 and may further be configured to provide a second PWM control signal for the clamp switch 120.

In accordance with states 41 to 43 in FIG. 5, an on-time of the first PWM control signal may depend on a given minimum on-time $t_{ON\_LS\_min}$, on a given maximum on-time $t_{ON\_LS\_max}$, and on an instant of on-time expiration when the current 115, I through the series connection 111, 112 exceeds the peak current envelope 116, $\hat{I}$ for the same. This corresponds to the peak-current control of the power switch 112.

In accordance with states 45 to 46 in FIG. 5, an on-time of the second PWM control signal may depend on a given on-time $t_{ON\_HS}$. This corresponds to an active clamping of the inductance 111, thereby supplying the energy stored in a leakage inductance (not shown) of the inductance 111 to the LED load 2, $R_{11}$ and improving a converter efficiency. In addition, a peak voltage across the power switch 112 during its turn-off events may be reduced significantly, resulting in a lower voltage rating of the power switch 112.

In accordance with states 43 to 45 and states 46 to 41 in FIG. 5, the on-times of the first and second PWM control signals may be mutually exclusive in accordance with a dead-time depending on a given minimum dead-time $t_{dead\_min}$, and on an instant of dead-time expiration when a time derivative $\frac{d}{dt}$ of a drain-source voltage $V_{ds}$ of a last active switch of the power switch 112 and the clamp switch 120 becomes zero. More specifically, in states 43 to 45 the power switch 112 was last active, whereas in states 46 to 41 the clamp switch 120 was last active. Note that a dead time when the power switch 112 was last active may be different from a dead time when the clamp switch 120 was last active.

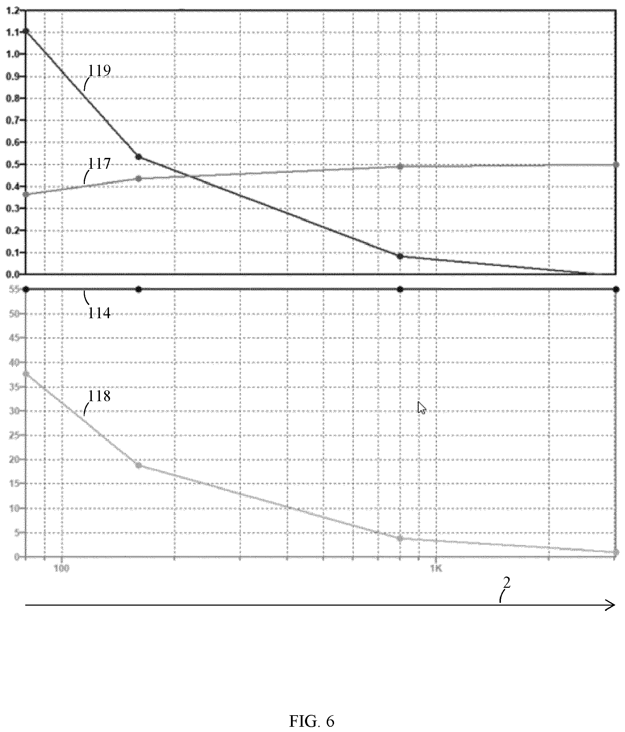

FIG. 6 illustrates a various electrical quantities of the PFC circuit 11 in accordance with the present disclosure.

A top diagram of FIG. 6 shows a control variable 119, $R$ of the control circuit 113 and a DC component 117, $\hat{I}_{DC}$ of the peak current envelope 116, $\hat{I}$ vs. LED load 2, $R_{11}$, whereas a bottom diagram of FIG. 6 depicts the regulated output voltage 114, $V_{out}$ and an output power 118, P of the PFC circuit 11 vs. LED load 2, $R_{11}$.

As can be seen, the output power 118,

$$P = \frac{V_{out}^2}{R_{11}}$$

declines inversely proportional to the LED load 2, $R_{11}$, as may be expected in connection with the regulated output voltage 114, $V_{out}$.

The control variable 119, $R$ shows a similar decline vs. the LED load 2, $R_{11}$.

The DC component 117, $\hat{I}_{DC}$ depending on the control variable 119, $R$ rises with increasing LED load 2, $R_{11}$ and approaches an asymptotic value. It may be established that the DC component 117, $\hat{I}_{DC}$ varies with / depends on LED load 2, $R_{11}$, or alternatively on the output power 118, $P$.

In accordance with FIG. 6, an increase in the output power 118, $P$ therefore coincides with a decrease in the DC component 117, $\hat{I}_{DC}$, and vice versa.

**Claims**

1. A converter (1) for an LED load (2), comprising a power factor correction, PFC, circuit (11), comprising

   a series connection (111, 112) of an inductance (111) and a power switch (112); and
   a control circuit (113), being configured to

   regulate an output voltage (114, $V_{out}$) of the PFC circuit (11) in accordance with a current (115, I) through the series connection (111, 112) and a peak current envelope (116, $\hat{I}$) for the same; and
   offset the peak current envelope (116, $\hat{I}$) by a direct current, DC, component (117, $\hat{I}_{DC}$) that depends on an output power of the PFC circuit (11).

2. The converter (1) of claim 1, the peak current envelope (116, $\hat{I} = C \cdot |V_{bus}| \cdot R(V_{out} - V_{out\_ref})$) depending

   - on a control variable (119, $R$) of the control circuit (113), the control variable (119, $R$) depending on a differential ($V_{out} - V_{out\_ref}$) of the output voltage (114, $V_{out}$) and its reference variable ($V_{out\_ref}$), and
   - on a multiplicative fraction of a rectified input voltage ($C \cdot |V_{bus}|$) of the PFC circuit (11).

3. The converter (1) of claim 2, the DC component (117, $\hat{I}_{DC} = k \cdot R(V_{out} - V_{out\_ref}) + d$) depending

   - on the control variable (119, $R$) of the control circuit (113),
   - on a constant coefficient (k) of the control variable (119, R), and
   - on a constant offset (d) of the DC component (117, $\hat{I}_{DC}$).

4. The converter (1) of claim 3, the constant coefficient (k) and the constant offset (d) being derived from simulations or measurements at a minimum value and a maximum value of the output power of the PFC circuit (11).

5. The converter (1) of any one of the claims 2 to 4, the control circuit (113) comprising a proportional integral, PI, controller (1131), being configured to provide the control variable (119, $R$) of the control circuit (113) in dependence of the differential ($V_{out} - V_{out\_ref}$) of the output voltage (114, $V_{out}$) and its reference variable ($V_{out\_ref}$).

6. The converter (1) of any one of the claims 2 to 5, the control circuit (113) comprising a pulse width modulation, PWM, signal generator (1132), being configured to provide a first PWM control signal for the power switch (112) in accordance with the control variable (119, $R$), the current (115, $I$) through the series connection (111, 112) and the peak current envelope (116, $\hat{I}$) for the same.

7. The converter (1) of claim 6, an on-time of the first PWM control signal depending

   - on a given minimum on-time ($t_{ON\_LS\_min}$),

- on a given maximum on-time ($t_{ON\_LS\_max}$), and
- on an instant of on-time expiration when the current (115, $I$) through the series connection (111, 112) exceeds the peak current envelope (116, $\hat{I}$) for the same.

8. The converter (1) of claim 7,

    the PFC circuit (11) comprising a Boost converter; and
    the first PWM control signal being in accordance with one of:

    - a discontinuous conduction mode, DCM, and
    - a borderline conduction mode, BCM.

9. The converter (1) of claim 6 or claim 7,
   the PFC circuit (11) comprising a Flyback converter.

10. The converter (1) of claim 9,
    the Flyback converter comprising a further series connection (120, 121) of a clamp switch (120) and a clamp capacitance (121) in parallel with the inductance (111).

11. The converter (1) of claim 10,
    the PWM signal generator (1132) further being configured to provide a second PWM control signal for the clamp switch (120).

12. The converter (1) of claim 10,
    an on-time of the second PWM control signal depending

    - on a given on-time ($t_{ON\_HS}$).

13. The converter (1) of claim 1,
    the on-times of the first and second PWM control signals being mutually exclusive in accordance with a dead-time depending

    - on a given minimum dead-time ($t_{dead\_min}$), and
    - on an instant of dead-time expiration when a time derivative of a drain-source voltage of a last active switch of the power switch (112) and the clamp switch (120) becomes zero.

14. A luminaire (3), comprising
    an LED load (2); and
    a converter (1) of any of the preceding claims for the LED load (2).

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

Application Number

EP 23 17 0234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/176101 A1 (SKINNER ANDREW JOHN [GB]) 12 July 2012 (2012-07-12) | 1-8 | INV.<br>H05B45/355 |
| Y | * page 1, paragraph 2; figures 1-12 *<br>* page 1, paragraph 9 - page 4, paragraph 108 *<br>* page 4, paragraph 120 - page 8, paragraph 217 *<br>* esp. Fig. 7 * | 9-14 | H05B45/325<br>H02M1/42<br>H05B45/38<br>H05B45/385 |
| X | US 9 621 029 B2 (ST MICROELECTRONICS SRL [IT]) 11 April 2017 (2017-04-11) | 1,14 | |
| Y | * column 1, lines 8-10; figures 1-11 *<br>* column 5, lines 22-67 *<br>* column 6, line 44 - column 10, line 11 *<br>* esp. Fig. 7 * | 9-13 | |
| X | WO 2014/009773 A1 (ROAL ELECTRONICS S P A [IT]; FERRARA ANTONIO [IT]; TOZZO FABRIZIO [IT]) 16 January 2014 (2014-01-16) | 1,14 | |
| A | * page 1, lines 1-2; figures 1-6 *<br>* page 2, line 30 - page 3, line 3 *<br>* page 3, line 18 - page 11, line 3 *<br>* esp. page 3, line 23; from page 3, line 18 to page 10, line 5; Fig. 4 * | 2-13 | TECHNICAL FIELDS SEARCHED (IPC)<br><br>H05B<br>H02M |
| Y | EP 3 736 959 A1 (TRIDONIC GMBH & CO KG [AT]) 11 November 2020 (2020-11-11)<br>* column 1, paragraph 1; figures 1-3 *<br>* column 2, paragraph 16 - column 4, paragraph 33 *<br>* column 5, paragraph 36 - column 8, paragraph 62 *<br>* esp. par. [0042]; Fig. 1: LED 104 * | 14 | |

-/--

The present search report has been drawn up for all claims

| Place of search | Date of completion of the search | Examiner |
|---|---|---|
| Munich | 5 September 2023 | Brosa, Anna-Maria |

EPO FORM 1503 03.82 (P04C01)

page 1 of 2

Europäisches
Patentamt
European
Patent Office
Office européen
des brevets

**EUROPEAN SEARCH REPORT**

Application Number

EP 23 17 0234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 437 146 A (CARPENTER RALPH F [US]) 13 March 1984 (1984-03-13) * column 1, lines 7-10; figures 1-5 * * column 2, lines 10-57 * * column 3, line 6 - column 10, line 56 * * esp. col. 3, lines 11-60; col. 4, lines 4-16; from col. 4, line 28 to col. 6, line 22; from col. 6, line 66 to col. 7, line 9; col. 7, lines 40-46; col. 8, lines 10-42; Figs. 1-3 * | 1-14 | |
| A | SEBASTIAN J ET AL: "Improving power factor correction in distributed power supply systems using PWM and ZCS-QR SEPIC topologies", PROCEEDINGS OF THE ANNUAL POWER ELECTRONICS SPECIALISTS CONFERENCE. MASSACHUSETTS, 25 - 27 JUNE, 1991; [PROCEEDINGS OF THE ANNUAL POWER ELECTRONICS SPECIALISTS CONFERENCE], NEW YORK, IEEE, US, vol. CONF. 22, 24 June 1991 (1991-06-24), pages 780-791, XP010048400, DOI: 10.1109/PESC.1991.162764 ISBN: 978-0-7803-0090-3 * the whole document * * esp. Figs. 6, 10, 13 * | 1-14 | TECHNICAL FIELDS SEARCHED (IPC) |

The present search report has been drawn up for all claims

| Place of search | Date of completion of the search | Examiner |
|---|---|---|
| Munich | 5 September 2023 | Brosa, Anna-Maria |

EPO FORM 1503 03.82 (P04C01)

## ANNEX TO THE EUROPEAN SEARCH REPORT
## ON EUROPEAN PATENT APPLICATION NO.

EP 23 17 0234

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | | Publication date |
|---|---|---|---|---|---|
| US 2012176101 | A1 | 12-07-2012 | GB 2487133 | A | 11-07-2012 |
| | | | JP 5663502 | B2 | 04-02-2015 |
| | | | JP 2012147663 | A | 02-08-2012 |
| | | | US 2012176101 | A1 | 12-07-2012 |
| US 9621029 | B2 | 11-04-2017 | CN 105991050 | A | 05-10-2016 |
| | | | CN 205265550 | U | 25-05-2016 |
| | | | DE 102016103952 | A1 | 22-09-2016 |
| | | | US 2016276936 | A1 | 22-09-2016 |
| WO 2014009773 | A1 | 16-01-2014 | US 2015216007 | A1 | 30-07-2015 |
| | | | WO 2014009773 | A1 | 16-01-2014 |
| EP 3736959 | A1 | 11-11-2020 | NONE | | |
| US 4437146 | A | 13-03-1984 | CA 1207383 | A | 08-07-1986 |
| | | | US 4437146 | A | 13-03-1984 |

EPO FORM P0459

For more details about this annex : see Official Journal of the European Patent Office, No. 12/82